(19) Europäisches Patentamt
European Patent Office
Office européen des brevets

(11) **EP 2 698 599 A1**

(12) **EUROPÄISCHE PATENTANMELDUNG**

(43) Veröffentlichungstag:
**19.02.2014 Patentblatt 2014/08**

(51) Int Cl.:
***G01B 21/04*** *(2006.01)*

(21) Anmeldenummer: **12180928.9**

(22) Anmeldetag: **17.08.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Hexagon Technology Center GmbH 9435 Heerbrugg (CH)**

(72) Erfinder:
• **Przygodda, Frank
D-88045 Friedrichshafen (DE)**

• **JENSEN, Thomas
CH-9400 Rorschach (CH)**
• **Schneider, Jürgen
D-35440 Linden (DE)**

(74) Vertreter: **Gyaja, Christoph Benjamin
Kaminski Harmann
Patentanwälte AG
Landstrasse 124
9490 Vaduz (LI)**

(54) **Koordinatenmessverfahren und Koordinatenmessmaschine zum Vermessen von Oberflächen mit einem optischen Sensor**

(57)    Die Erfindung betrifft ein Koordinatenmessverfahren zum Erfassen einer Objektoberfläche (2) mittels einer Koordinatenmessmaschine, mit einem Messkopf zur Aufnahme eines Sensors, einer Führung zur Bereitstellung einer Relativbewegung des Messkopfs zu der Objektoberfläche in zumindest eine Richtung, einem optischen Sensor zur Erfassung der Objektoberfläche (2), und einer Steuerungseinheit, wobei im Rahmen des Koordinatenmessverfahrens ein optisches Erfassen der Objektoberfläche (2) durch den optischen Sensor erfolgt und dabei ein ein Oberflächenprofil in einer Objektprofil-Domäne repräsentierender Datensatz erzeugt wird. Dabei erfolgt ein Filtern des Datensatzes durch ein Simulieren eines Kontaktierens des durch den Datensatz repräsentierten Oberflächenprofils mit einem virtuellen taktilen Sensor (8) und ein Ableiten eines Taktil-Datensatzes aus dem simulierten Kontaktieren, sodass der Taktil-Datensatz ein virtuelles Taktil-Oberflächenprofil (8b) in einer Virtuellen-Sensor-Domäne repräsentiert. Zudem erfolgt ein Ableiten von Oberflächenkoordinaten aus dem Taktil-Datensatz.

*Fig. 6*

EP 2 698 599 A1

**Beschreibung**

Die Erfindung betrifft ein Koordinatenmessverfahren nach dem Oberbegriff des Anspruchs 1 zum Erfassen einer Objektoberfläche eines Objekts mit einer Koordinatenmessmaschine und eine Koordinatenmessmaschine nach dem Oberbegriff des Anspruchs 10 zur Erfassung einer Objektoberfläche eines Objekts, sowie ein Computerprogrammprodukt nach dem Oberbegriff des Anspruchs 15.

In vielen technischen Anwendungsbereichen besteht das Bedürfnis, Oberflächen von Objekten und damit auch die Objekte selbst mit hoher Genauigkeit zu vermessen. Dieses gilt insbesondere für die fertigende Industrie, für die das Vermessen und Überprüfen von Oberflächen von Werkstücken hohe Bedeutung, insbesondere auch zu Zwecken der Qualitätskontrolle, hat.

Für diese Anwendungen werden üblicherweise Koordinatenmessmaschinen eingesetzt, welche eine präzise Vermessung der Geometrie einer Objektoberfläche, typischerweise mit Mikrometer-Genauigkeit, ermöglichen. Zu vermessende Objekte können beispielsweise Motorblöcke, Getriebe und Werkzeuge sein. Bekannte Koordinatenmessmaschinen vermessen die Oberfläche, indem ein mechanischer Kontakt hergestellt und die Oberfläche abgetastet wird. Beispiele hierfür sind Portalmessmaschinen, wie sie z.B. in der DE 43 25 337 oder DE 43 25 347 beschrieben werden. Ein anderes System beruht auf der Verwendung eines Gelenkarms, dessen am Ende des mehrteiligen Arms angeordneter Messsensor entlang der Oberfläche bewegt werden kann. Gattungsgemässe Gelenkarme werden beispielsweise in der US 5,402,582 oder der EP 1 474 650 beschrieben.

Im Stand der Technik wird mit solchen Koordinatenmessgeräten als Standardmesssensor ein taktiler Sensor verwendet, welcher beispielsweise aus einer Rubinkugel besteht, die auf einem Messstab montiert ist. Die Auslenkung des taktilen Sensors, im Falle einer für dreidimensionale Messungen ausgelegten Koordinatenmessmaschine in drei zueinander senkrechten Richtungen X, Y und Z, wird bei der Abtastung über ein Schaltelement oder wegmessendes Element bestimmt. Anhand des Schaltpunkts oder Auslenkungswegs werden der Ort des Kontakts und damit die Oberflächenkoordinaten berechnet.

Zur Rekonstruktion des Oberflächenprofils aus den Messdaten müssen die mechanischen Abmessungen des Sensors selbst und dessen Ausrichtung beim Kontakt mit der Objektoberfläche berücksichtigt werden. Der Sensor ist ausgebildet mit einer Messspitze bekannter Geometrie, typischerweise sphärisch oder für spezielle Anwendungen ellipsoidal, typischerweise mit einem (Haupt-)Radius in der Grössenordnung einiger Millimeter. Der Begriff "Messspitze" ist im Zusammenhang mit der vorliegenden Erfindung allgemein zu verstehen als (taktiler) Messsensor jeder beliebigen Form und Ausdehnung, wobei dieser nicht zwingend eine spitz zulaufende Form aufweisen muss (jedoch kann). Die mit der Koordinatenmessmaschine unter Verwendung eines taktilen Sensors gemessenen Rohdaten stellen die gemessenen Ortskoordinaten eines Bezugspunkts der Messspitze, beispielsweise des Messspitzen-Zentrums, dar und werden nachfolgend als bezogen auf eine "Sphärenzentrum-Domäne" (sphere center domain) bezeichnet. Mittels eines Transformations-Algorithmus, in dem die Form der Messspitze und deren Ausrichtung beim Kontakt mit der Objektoberfläche berücksichtigt sind, werden üblicherweise die gemessenen Koordinaten aus der Sphärenzentrums-Domäne in das rechnerisch bestimmte Objektoberflächenprofil ("Objektprofil-Domäne") transformiert.

Bedingt durch die physikalischen Abmessungen der Messspitze des taktilen Sensors ist jedoch die Messungsauflösung beschränkt. Die physikalische Abmessung der Messspitze bzw. die damit verbundene limitierte Messungsauflösung führen zu einem "Glättungseffekt" bei der Vermessung rauer Oberflächen: Während Erhebungen oder Spitzen einer Objektoberfläche nahezu perfekt bzw. objektgetreu gemessen werden können, kann die Messspitze des taktilen Sensors aufgrund ihrer physikalischen Ausdehnung nicht in enge Vertiefungen einer Objektoberfläche eindringen. Dieses bewirkt eine Glättung des gemessenen Oberflächenprofils in einer nichtlinearen Art, indem die Messdaten von vertieften Oberflächenbereichen geglättet sind, während die Messdaten erhabener Oberflächenbereiche nahezu objektgetreu sind. Für ingenieur-technische Aspekte ist dieses sogar oft vorteilhaft, weil, insbesondere für eine flächige Verbindung von Oberflächen zweier Objekte, oft eine genaue Kenntnis von deren erhabenen Bereichen wichtiger als die genaue Bestimmung enger vertiefter Oberflächenbereiche ist.

Andererseits ist die Auflösung taktiler Messungen, insbesondere für eine genauere Vermessung von Oberflächenvertiefungen aus den vorgenannten methodeninhärenten Limitierungen, für viele neue Anwendungen nicht mehr ausreichend.

Deshalb werden im Stand der Technik inzwischen Ansätze zur berührungslosen Vermessung, insbesondere mit optischen Sensoren, verfolgt. Mittels eines optischen Sensors mit einem ausgesandten Messlichtstrahl, insbesondere von einem Laser, können auch Oberflächenvertiefungen sehr genau vermessen werden, solange der Fokus des Messlichtstrahls, zu vergleichen mit der Messspitze eines taktilen Sensors, auf der Objektoberfläche nicht grösser als die Struktur von deren Vertiefungen ist. Die Auflösung optischer Messverfahren kann demzufolge deutlich höher sein, als diejenige taktiler Messverfahren für eine genaue Vermessung von Oberflächenprofilen, insbesondere von deren Vertiefungen. Demzufolge unterscheidet sich ein mit einem optischen Sensor erstelltes Profil von einem mit einem taktilen Sensor erstellten Profil einer und derselben Objektoberfläche. Auch ein mit einem optischen Sensor erstelltes Oberflächenprofil stellt, ebenso wie ein mit einem taktilen Sensor erstelltes Oberflächenprofil, jedoch eine, basierend auf den physikalischen Abmessungen der "Messspitze", in ihrer Auflösung gefilterte Abbildung der tatsächlichen Objektoberfläche dar, wobei die Abmessungen der optischen "Messspitze" im Vergleich zu der Messspitze eines taktilen Sensors als gegen Null konvergierend angesehen werden können bzw. vernachlässigbar sind. Deswegen sind optische Sensoren und Messverfahren für eine Koordinatenmessmaschine geeignet, prinzipiell eine wirklich objektgetreue Vermessung eines Oberflächenprofils bereitzustellen.

Inzwischen in die Messtechnik mit Koordinatenmessmaschinen eingeführte optische Sensoren beruhen beispielsweise auf einer Einstrahlung von Laserlicht auf eine Objektoberfläche für interferometrische Messungen (EP 2 037 214). Auch Verfahren beruhend auf Weisslicht-Interferometrie (DE 10 2005 061 464) und chromatisch-konfokale Verfahren (FR 273 8343) wurden vorgeschlagen.

Optische Sensoren bzw. Messverfahren für eine Koordinatenmessmaschine sind mit einer Reihe von Vorteilen verbunden: Die Messung erfolgt kontaktlos, und der optische Sensor kann schneller als ein taktiler Sensor über eine Objektoberfläche geführt werden, mit einer geringeren physikalischen Abmessung der "Messspitze", wodurch eine höhere laterale Auflösung der Messung ermöglicht wird.

Trotzdem beinhalten nicht nur mit taktilen, sondern auch mit optischen Sensoren erstellte Oberflächenprofile immer auch Merkmale, die nicht von der vermessenen Oberfläche stammen, sondern durch das Messverfahren bedingt sind. Beispielsweise sind aus der DE 197 35 975 Messfehler bei der Höhenbestimmung einer Oberfläche aufgrund von Vibrationen der verwendeten Koordinatenmessmaschine und Verfahrensmassnahmen für eine Unterdrückung dieser Effekte bekannt.

Die Messergebnisse optischer Sensoren, insbesondere für interferometrische Messverfahren, werden oft nachteilig durch Phasenrauschen oder Speckle-Effekte beeinflusst. Abhängig von der Rauigkeit der Objektoberfläche kann beispielsweise die Phase des von einer Oberfläche reflektierten Lichts in einer solchen Weise verändert werden, dass eine zu einem angepeilten Objektpunkt gemessene Distanz falsch ist. Als Folge solcher lokalen optischen Störeinflüsse weisen mit optischen Sensoren vermessene Oberflächenprofile oft Messfehler auf, wie beispielsweise virtuelle singuläre, aber in der Objektoberfläche nicht existierende Spitzen oder Vertiefungen.

Für eine Entfernung der Daten solcher Fehlmessungen aus den Messresultaten wird üblicherweise eine Nachbearbeitung der Messergebnisse mittels eines geeigneten Algorithmus für eine Filterung der Rohdaten durchgeführt. Eine äusserst einfache Datenfilterung beruht auf einer "gleitenden Durchschnittsbildung" der Messergebnisse, indem, ausgehend von einem ersten Messwert, die Messwerte einer vorbestimmten Anzahl lateral sequentiell aufgenommener Messwerte mit dem ersten Messwerte gemittelt werden und der bestimmte Mittelwert einem den betreffenden Messorten auf dem vermessenen Objekt zugeordneten Messungsmittelpunkt zugeordnet wird, wobei dieses Mittelungsverfahren dann fortschreitend für alle vermessenen Messorte auf dem Objekt fortgesetzt wird. Andere bekannte Filterungstechniken beruhen auf triangulären oder polynominalen Kernel-Filtern oder auf spezifisch definierten Transformationsfunktionen im Frequenzraum.

Da Messungen mit taktilen und optischen Sensoren unterschiedlichen Störeinflüssen unterliegen, müssen die Filter-Algorithmen an die jeweilige Sensorart angepasst werden.

Zur Bearbeitung der Ergebnisse taktiler Messungen eingesetzte Filter wirken üblicherweise weniger stark, da die physikalische Abmessung der Messspitze eines taktilen Sensors bereits zu einem Glättungseffekt führt. Bei Anwendung der Filter auf die Messdaten in der Sphärenzentrum-Domäne, in der bereits durch die Messspitze geglättete Messdaten (verglichen mit dem tatsächlichen Oberflächenprofil) vorliegen, erfolgt für die in die Objektprofil-Domäne (profile domain) rücktransformierten gefilterten Daten nur ein geringer Informationsverlust. Insbesondere die Messwerte kritischer Erhebungen bzw. Peak-Höhen der Oberfläche werden durch die Datenfilterung in der Sphärenzentrums-Domäne kaum beeinflusst.

Für die Bearbeitung der Messdaten optischer Sensoren eingesetzte Filter sind insbesondere vorgesehen zur Beseitigung von durch optisches Rauschen und Speckle-Effekte hervorgerufenen Messfehlern und wirken sich oft stärker aus. Beispielsweise wird zunächst eine Vorfilterung mit einem schmalen Rechteck-Filter durchgeführt, insbesondere zur Beseitigung von Speckle-Effekten. Bei der Auswahl der Filterbreite werden üblicherweise der Durchmesser des erzeugten Lichtpunkts des von dem optischen Sensor ausgesandten Messstrahls auf der Objektoberfläche und ein durch die scannende Bewegung des Messstrahls über die Objektoberfläche bewirkte "Verschmierung" der Messdaten berücksichtigt. In einem zweiten Bearbeitungsschritt wird dann häufig eine zusätzliche Filterung mit einem dreieckförmigen Filter-Kernel durchgeführt. Insbesondere bei Verwendung relativ breiter Dreiecksfilter-Kernel kann die maximale Höhe sehr schmal bzw. spitz ausgebildeter Oberflächenerhebungen abgeschnitten werden. Andererseits werden bei Verwendung relativ schmaler Filter optisches Rauschen und/oder Effekte von für technische Anwendungen nicht relevanten Oberflächenrauigkeiten nicht ausreichend unterdrückt.

Da optische Sensoren Messwerte unmittelbar in der Objektprofil-Domäne liefern, werden die Daten bei der Filterung, ohne eine Rücktransformation, bereits in der Objektprofil-Domäne reduziert, was zu einem Verlust an Information auch über tatsächliche, und nicht nur artifizielle, Oberflächenmerkmale führen kann.

Nachteilig am Stand der Technik ist ferner, dass die bekannten Verfahren zur Bearbeitung von Messdaten optischer Sensoren von Koordinatenmessmaschinen häufig zu einem Verlust von Informationen über wesentliche Strukturdetails, insbesondere schmale Erhebungen, einer Objektoberfläche führen.

Eine Aufgabe der Erfindung ist die Bereitstellung eines verbesserten Koordinatenmessverfahrens bzw. einer verbesserten Koordinatenmessmaschine mit einem optischen Sensor, wobei mit dem optischen Sensor erfasste Messdaten mit einer für taktile Messdaten vorgesehenen Verarbeitungsfunktionalität zumindest mittelbar weiterverarbeitbar sind.

Eine weitere Aufgabe der Erfindung ist es, ein verbessertes Koordinatenmessverfahren bzw. eine verbesserte Koordinatenmessmaschine bereitzustellen, womit eine objektgetreuere Erstellung eines Oberflächenprofils eines Objekts mittels optischer Sensoren ermöglicht wird und eine Vergleichbarkeit mit Messdaten aus taktilen Oberflächenmessungen derselben Oberfläche gegeben ist. Dabei besteht eine spezielle Aufgabe darin Informationsverluste über schmale Oberflächen-Peaks zu vermeiden.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Koordinatenmessverfahren zum Erfassen einer Objektoberfläche eines Objekts mit einer Koordinatenmessmaschine mit einem Messkopf mit einem optischen Sensor zur Erfassung der Objektoberfläche und einer Führung zur Bereitstellung einer Relativbewegung des Messkopfs zu dem Objekt in zumindest eine Richtung, insbesondere in zwei Richtungen. Die Führung ist dabei allgemein als ein Mittel zur Bereitstellung einer definierten relativen Bewegung des Messkopfes zum Objekt bzw. zu einer einen Absolutbezug definierenden Basis der Koordinatenmessmaschine zu verstehen. In diesem Zusammenhang kann die Führung beispielsweise als Linearführung mit einer Schiene und einem Schlitten oder als Drehgelenksführung mit zumindest zwei relativ zueinander schwenkbaren und/oder rotierbaren Gelenkelementen, insbesondere Gelenkarmen, ausgeführt sein.

Ausserdem weist die Koordinatenmessmaschine eine Steuerungseinheit auf, wobei im Rahmen des Koordinatenmessverfahrens ein optisches Erfassen der Objektoberfläche mit dem optischen Sensor der Koordinatenmessmaschine erfolgt und dabei ein ein Oberflächenprofil in einer Objektprofil-Domäne repräsentierender Datensatz erzeugt wird.

Erfindungsgemäss erfolgt ein Filtern des Datensatzes durch ein Simulieren eines Kontaktierens des durch den Datensatz repräsentierten Oberflächenprofils mit einem virtuellen taktilen Sensor und ein Ableiten eines Taktil-Datensatzes aus dem simulierten Kontaktieren, sodass der Taktil-Datensatz ein virtuelles Taktil-Oberflächenprofil in einer Virtuellen-Sensor-Domäne repräsentiert. Zudem werden aus dem Taktil-Datensatz Oberflächenkoordinaten für die Objektoberfläche abgeleitet.

Dadurch können zum einen durch die Verwendung optischer Sensoren bedingte Effekte optischen Rauschens und für technische Anwendungen nicht relevante Oberflächenrauhigkeitsdaten eliminiert werden. Eine solche Optimierung ist für praktisch-technische Anwendungen heranziehbar, um ein auf den optischen Messungen beruhendes Messprofil aus den Originaldaten in einen solchen Zustand zu überführen, dass das so erzeugte Profil mit einer taktilen Messung derselben Oberfläche vergleichbar ist. Durch die Ableitung des taktilen Oberflächenprofils aus dem simulierten taktilen Kontaktieren der Oberfläche bleiben die Eigenschaften klein ausgebildeter Erhöhungen der Oberfläche erhalten, wie nach einer Vermessung mit einem reellen taktilen Sensor.

Als optische Sensoren können im Rahmen der vorliegenden Erfindung beispielsweise Laserscanner, Linienprojektionsscanner, auf Interferometrie basierende optische Messsysteme, Weisslichtinterferometer oder mittels Fokusvariation arbeitende Messgeräte Verwendung finden.

Da optische Sensoren als taktile Sensoren mit einem Sensorradius des kontaktierenden Sensorelements gegen "Null" angesehen werden können, werden Messungen mit einem solchen optischen Sensor direkt in der Objektprofil-Domäne erzeugt und bedürfen somit keiner weiteren Transformation bzw. Filterung für z.B. eine anschliessende Oberflächenrekonstruktion. Hingegen müssen taktil erfasste Oberflächendaten für eine Weiterverarbeitung aus der Sphärenzentrum-Domäne, in welcher diese erfasst sind, in die Objektprofil-Domäne überführt werden. D.h. Daten, die so generiert werden, dass diese direkt die Objektoberfläche abbilden, werden als in der Objektprofil-Domäne erzeugte Daten angesehen. Daten, die zwar bei einer Erfassung einer Oberfläche erzeugt wurden, jedoch die Objektoberfläche nur mittelbar darstellen, werden als in der Sphärenzentrum-Domäne erzeugte Daten verstanden. Diese Sphärenzentrum-Domäne-Daten bedürfen einer weiteren Transformation, damit die Objektoberfläche direkt abgebildet wird, wofür z.B. die Eigenschaften eines zur Erfassung verwendeten Sensors (z.B. Form und Grösse einer Messspitze) berücksichtigt werden müssen.

Als Taktil-Datensatz wird ein Datensatz verstanden, welcher z.B. aus einem originär mittels optischer Detektion mit einem optischen Sensor erzeugten Datensatz abgeleitet wurde, wobei für ein solches Ableiten ein Filtern mittels eines modellierten taktilen Messinstruments erfolgt. Ein solcher Taktil-Datensatz wird mittels Filterns und Überführens von Daten aus der einen in eine andere (Erfassungs-) Domäne generiert, insbesondere dadurch, dass für das Überführen ein simuliertes Oberflächenkontaktieren mit einem virtuellen taktilen Sensor erfolgt.

Da der Taktil-Datensatz, welcher bei der Filterung mittels des simulierten Kontaktierens mit einem virtuellen taktilen Sensor erzeugt wird, die Oberfläche bzw. das Profil der Oberfläche wiederum mittelbar repräsentiert (der virtuelle taktile Sensor weist eine bestimmte virtuelle, modellierte Form und virtuelle, modellierte Ausdehnung auf, welche jeweils einen Einfluss auf die damit abgeleiteten Daten haben), ist die Virtuellen-Sensor-Domäne (hierarchisch) gleichbedeutend zu betrachten zur Sphärenzentrum-Domäne.

Mit anderen Worten betrifft die Erfindung ein post-processing Verfahren bzw. Algorithmus für Messdaten, die mit einem optischen Sensor einer Koordinatenmessmaschine erfasst sind. Mit dem optischen Sensor wird eine Objektoberfläche vermessen und die Oberfläche dadurch in der Objektprofil-Domäne (profile domain) abgebildet. Im Rahmen des post-processing dieser generierten Profildaten erfolgt dann eine Simulation eines Kontaktierens des in der Objektprofil-Domäne vorliegenden Oberflächenprofils. Hierfür wird ein virtueller taktiler Sensor modelliert und dieser virtuell mit der Oberfläche in Kontakt gebracht. Dieses simulierte Kontaktieren kann beispielsweise eindimensional, d.h. es wird ein Messpunkt (koordinativ) kontaktiert, oder mehrdimensional, d.h. mehrere Punkte einer Linie oder einer Fläche werden kontaktiert, erfolgen. Während eines Vorliegens eines solchen Kontakts wird ein Bezugspunkt des simulierten Sensors (z.B. ein Mittelpunkt einer als virtueller Sensor implementierten Kugel oder einer Kreisscheibe) erfasst bzw. berechnet. Ein solches Kontaktieren kann nun hinsichtlich der Gesamtheit der mit dem optischen Sensor erfassten Daten erfolgen, sodass die Oberflächenpunke der optisch erfassten Oberfläche durch eine Mehrzahl der dabei generierten Bezugspunkte abgebildet wird. Dieser Bezugspunkt bzw. die Mehrzahl dieser Punkte stellt dann den Taktil-Datensatz dar. Daraus kann ein so bereits transformiertes Oberflächenprofil (Taktil-Oberflächenprofil) abgeleitet werden, welches die originär erfasste Oberfläche gefiltert durch den virtuellen taktilen Sensor darstellt. Mittels einer derartigen Filterung können aus dem Taktil-Datensatz Oberflächenkoordinaten, d.h. Koordinaten für jeden Bezugspunkt und/oder interpolierte Punkte, für die Objektoberfläche abgeleitet werden.

Hinsichtlich der Implementierung des virtuellen taktilen Sensors kann dieser erfindungsgemäss insbesondere ellipsoid geformt implementiert sein, insbesondere als Vollkugel oder Halbkugel. In diesem Zusammenhang sind ferner alternative virtuelle Implementierungen ausführbar, die eine vorteilhafte morphologische Abbildung der Oberfläche ermöglichen.

Im Falle der Abtastung entlang einer Linie, bei welchem somit nur 2D-Daten vorliegen, kann die laterale Ausdehnung des virtuellen Sensors als Null bzw. gegen Null gehend betrachtet werden. Diese einer Kreisscheibe entsprechende Form berücksichtigt das Fehlen von Messdaten senkrecht zu der abgetasteten Linie. Bei der Transformation von der Sphären- bzw. Scheibenzentrums-Domäne zur Objektprofil-Domäne wird nur die Sensorform in Abtastrichtung berücksichtigt.

Im Speziellen bei Vorliegen von 3D-Daten kann der virtuelle taktile Sensor als Sphäre mit einem definierten Sphärenradius implementiert sein, insbesondere wobei der Sphärenradius in Abhängigkeit von einer bereitzustellenden Oberflächenglättung eingestellt wird. Dabei kann der virtuelle taktile Sensor insbesondere als Messspitze mit einem definierten Spitzenradius implementiert sein, wobei der Spitzenradius in Abhängigkeit von der bereitzustellenden Oberflächenglättung eingestellt werden kann.

Dadurch können im Rahmen des Filterns Messergebnisse generiert werden, welche insbesondere solchen Messergebnissen mit typischen taktilen Sensoren (z.B. Tastfühler mit Rubinkugel als Kontaktelement) nahe kommen bzw. damit vergleichbar sind. Damit wird es einem Benutzer ermöglicht, ohne Schwierigkeiten die Messergebnisse beruhend auf einem optischen Sensor mit denjenigen, welche auf einem taktilen Sensor beruhen, zu vergleichen. Ein zusätzliches Filtern der optischen Messdaten kann mit einem schwächer wirkenden bzw. eingestellten Datenfilter durchgeführt oder gegebenenfalls weggelassen werden. Durch Vergrösserung des Spitzenradius des virtuellen taktilen Sensors kann kontinuierlich bzw. graduell ein Übergang von einer Darstellung der Oberflächenrauhigkeit zu einer Repräsentation der zugehörigen Oberflächenmorphologie erzeugt werden. Für solche Zwecke zu implementierende Radien der Messspitze eines taktilen Sensors, zur Bestimmung von Oberflächenrauhigkeit, -welligkeit oder - morphologie, sind beispielsweise den ISO-Normen 4287:1998 und 11562:1998 zu entnehmen. Durch die Einstellung des Spitzenradius des virtuellen taktilen Sensors kann die Glättung durch das Verfahren der Bearbeitung in einer gewünschten Auflösung der Oberflächenstrukturen eingestellt werden, womit sogar eine bessere Rauschunterdrückung, insbesondere von durch Oberflächenrauhigkeiten bedingtem Datenrauschen, als mit herkömmlichen Verfahren zur Filterung der Daten optischer Sensoren von Koordinatenmessmaschinen erreicht werden kann.

Ausserdem kann die Formgebung der (simulierten taktilen) Messspitze so implementiert werden, dass die mit einem entsprechenden Algorithmus erzeugten Daten den Messergebnissen mit traditionellen taktilen Sensoren möglichst entsprechen.

Im Rahmen des simulierten Kontaktierens kann erfindungsgemäss ein fortlaufendes sequenzielles Abtasten des erzeugten Oberflächenprofils in der Objektprofil-Domäne mit dem virtuellen taktilen Sensor simuliert werden und fortlaufend der Taktil-Datensatz, insbesondere das Taktil-Oberflächenprofil, daraus abgeleitet werden, insbesondere wobei das Abtasten mit zeilenweisem Versatz erfolgt. Ausserdem kann erfindungsgemäss im Rahmen des simulierten Kontaktierens ein mehrdimensionales Antasten des durch den Datensatz repräsentierten Oberflächenprofils virtuell derart erfolgen, dass daraus der Taktil-Datensatz in Abhängigkeit einer vorgegebenen lateralen Auflösung mehrdimensional ableitbar ist, insbesondere wobei das virtuelle Antasten der Objektoberfläche in Bezug auf die Fläche der erfassten Objektoberfläche synchron erfolgt. D.h. die Objektoberfläche kann in ihrer Gesamtheit gleichzeitig virtuell angetastet werden und der Taktil-Datensatz kann daraus in einem Schritt abgeleitet werden (im Gegensatz zu einem fortlaufenden Ableiten).

Insbesondere bei der Abtastung entlang einer Linie kann es vorteilhaft sein, a priori Information über die Objektoberflächenkontur, z.B. aus einem CAD-Modell, in die Berechnung des Taktil-Datensatzes einfliessen zu lassen. Dadurch können seitlich zur Abtast-Linie befindliche Oberflächenmerkmale, welche eine "Anhebung" eines taktilen Sensors bewirken, auch bei dem virtuellen taktilen Sensor berücksichtig werden. Der virtuelle Datensatz wird dadurch besser vergleichbar mit einem rein taktilen Datensatz. Bei der Transformation von der Sphärenzentrum-Domäne in die Objektprofil-Domäne wird die a priori Information gleichermassen berücksichtigt.

Hinsichtlich der vorgenannten Alternativen für ein simuliertes Kontaktieren kann eine für eine jeweilige auszuführende Messaufgabe bzw. in Abhängigkeit der erfassten optischen Messdaten eine spezifische Methode implementiert sein. Z.B. kann abhängig von einem Zeitbedarf und/oder einer Genauigkeitsanforderung des jeweiligen Filters eine Kontaktiermethode gewählt werden. Diese können ferner nacheinander oder insbesondere gleichzeitig - beispielsweise für einen Vergleich der dadurch generierten Taktil-Daten - ausgeführt werden.

Gemäss einer weiteren erfindungsgemässen Ausführungsform erfolgt ein Vorfiltern derart, dass das durch optisches Erfassen erzeugte Oberflächenprofil in der Objektprofil-Domäne zumindest teilweise bezüglich einer in dem Oberflächenprofil vorliegenden Höhenverteilung gemittelt wird, insbesondere geglättet wird.

Dadurch kann beispielsweise der Einfluss optischen Rauschens oder von Speckle-Effekten vermieden bzw. reduziert werden, wobei beispielsweise ein Filter zur Mittelung einer vorbestimmten Anzahl sequentiell lateral aufeinander folgender Messwerte der Objektoberfläche wie eingangs beschrieben eingesetzt werden kann. Dabei kann der Filter eingestellt sein zur Mittelung von Messwerten von relativ nahe zueinander angeordneten Messpunkten auf der vermessenen Objektoberfläche.

Ein Vorfiltern der Originalmessdaten kann auch für eine Reduktion der Datenmenge und damit für eine Reduktion der zugehörigen Verarbeitungszeit herangezogen werden, bevor eine Überführung des erzeugten optischen Oberflächenprofils in ein (virtuelles) taktiles Oberflächenprofil erfolgt. Dazu kann beispielsweise ein einfacher Filter zur Mittelung von Messergebnissen von lateral auf dem Objekt benachbart angeordneten Messpunkten, wie vorangehend beschrieben, eingesetzt werden.

Im Speziellen kann das Ableiten der Oberflächenkoordinaten erfindungsgemäss unter Berücksichtigung eines eine Form und/oder eine räumliche Ausdehnung des virtuellen taktilen Sensors definierenden Parameters aus dem Taktil-Datensatz erfolgen, insbesondere aus dem Taktil-Oberflächenprofil, insbesondere unter Berücksichtigung des Sphärenradius, sodass eine rekonstruierte Objektoberfläche abgeleitet werden kann.

Insbesondere erfolgen erfindungsgemäss das Simulieren des Kontaktierens und das Ableiten des Taktil-Datensatzes so und somit repräsentiert erfindungsgemäss das Taktil-Oberflächenprofil die Objektoberfläche so, als ob diese mit einem reellen taktilen Sensor erfasst wäre. Nach dem Filtern liegt der erzeugte Taktil-Datensatz demnach so vor als ob die Oberfläche mit einem taktilen Sensor abgetastet worden wäre und die Taktil-Daten die taktil erfasste Oberfläche abbilden.

Die Erfindung betrifft ausserdem eine Koordinatenmessmaschine zur Erfassung einer Objektoberfläche eines Objekts mit einer Basis, einem Messkopf mit einem optischen Sensor zur Erfassung der Objektoberfläche, einer Führung zur Bereitstellung einer Relativbewegung des Messkopfs relativ zur Basis in zumindest eine Richtung, insbesondere in zwei Richtungen, und einer Steuerungs- und Verarbeitungseinheit. Zudem weist die Koordinatenmessmaschine eine Scanfunktionalität auf, bei deren Ausführung gesteuert durch die Steuerungs- und Verarbeitungseinheit ein Erfassen der Objektoberfläche durch optisches Abtasten vermittels des optischen Sensors erfolgt und dabei ein ein Oberflächenprofil in einer Objektprofil-Domäne repräsentierender Datensatz erzeugt wird.

Erfindungsgemäss weist die Koordinatenmessmaschine ferner eine Filterfunktionalität auf, bei deren Ausführung gesteuert durch die Steuerungs- und Verarbeitungseinheit mittels eines Algorithmus ein Filtern des Datensatzes erfolgt durch ein Simulieren eines Kontaktierens des durch den Datensatz repräsentierten Oberflächenprofils mit einem virtuellen taktilen Sensor und ein Ableiten eines Taktil-Datensatzes aus dem simulierten Kontaktieren, sodass der Taktil-Datensatz ein virtuelles Taktil-Oberflächenprofil in einer Virtuellen-Sensor-Domäne repräsentiert. Zudem sind Oberflächenkoordinaten für die Oberfläche aus dem Taktil-Datensatz ableitbar.

Weiters kann die Steuerungs- und Verarbeitungseinheit derart konfiguriert sein, dass ein oben genanntes erfindungsgemässes Koordinatenmessverfahren ausführbar ist, insbesondere wobei das Filtern gesteuert durch die Steuerungs- und Verarbeitungseinheit ausgeführt wird.

Ausserdem kann die Führung der Koordinatenmessmaschine erfindungsgemäss ausgebildet sein als Linearführung mit einem Führungselement, insbesondere einer Schiene, und mit einem Antriebselement, insbesondere einem Schlitten, insbesondere wobei das Antriebselement entlang des Führungselements definiert motorisiert bewegbar ist.

Insbesondere kann die Koordinatenmessmaschine eine den Messkopf tragende Rahmenstruktur aufweist, wobei die Rahmenstruktur in eine horizontale und eine vertikale Richtung relativ zur Basis bewegbar ist, insbesondere mittels der Linearführung.

Die Rahmenstruktur kann dabei zumindest ein erstes und ein zweites Rahmenelement und eine vertikale Stange aufweisen, insbesondere wobei das zumindest eine erste Rahmenelement vermittels der Führung relativ zur Basis bewegbar ist.

Gegenstand der Erfindung ist ferner ein Computerprogrammprodukt, das auf einem maschinenlesbaren Träger gespeichert ist, zur Ausführung des erfindungsgemässen Filters des Datensatzes des Koordinatenmessverfahrens, insbesondere wenn das Computerprogrammprodukt auf einer Steuerungs- und Verarbeitungseinheit einer erfindungsgemässen Koordinatenmessmaschine ausgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:

Fig.1 eine Koordinatenmessmaschine, beispielhaft ausgebildet als eine Portal-Koordinatenmessmaschine;

Fig.2a-b Illustrationen der Abtastung einer Oberfläche mit einem taktilen Sensor und der mit dem taktilen Sensor erzeugten Messdaten;

Fig.3a-b schematische Ausschnittsvergrösserungen zu Fig. 2a und 2b;

Fig.4a-b beispielhafte schematische Darstellungen eines Messkopfs mit einem optischen Sensor für eine Koordinatenmessmaschine;

Fig.5-b Blockdiagramme zur Illustration bekannter Verfahren zur Bearbeitung der Messdaten von Koordinatenmessmaschinen mit taktilen Sensoren oder mit optischen Sensoren;

Fig.6 eine Illustration des erfindungsgemässen Verfahrens zur Erzeugung für praktisch-technische Anwendungen besser geeigneter Daten von mit optischen Sensoren vermessenen Oberflächen;

Fig. 7a-c Blockdiagramme zur Illustration des erfindungsgemässen Verfahrens in verschiedenen Ausführungsformen; und

Fig. 8a-b schematische Illustrationen zur Darstellung der Abtastung einer Objektoberfläche mit optischen Sensoren, die mit einem Liniensensor bzw. mit einem Flächensensor ausgebildet sind.

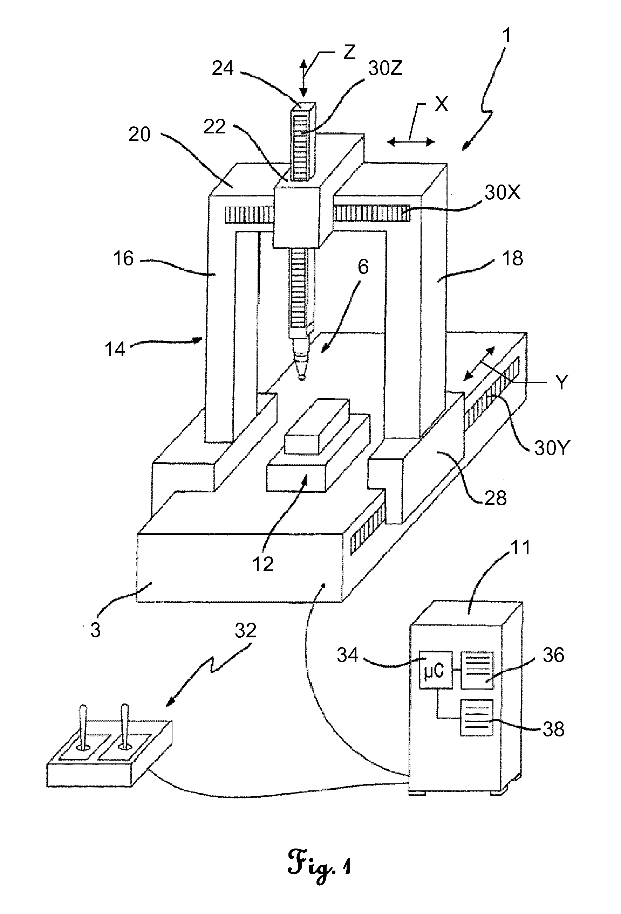

Fig. 1 zeigt eine Koordinatenmessmaschine 1, beispielhaft ausgebildet als eine Portal-Koordinatenmessmaschine 1.

Die Koordinatenmessmaschine 1 weist eine Basis 3 auf, auf der ein Portal 14 derart angeordnet ist, dass es in einer longitudinalen Richtung (Y-Richtung) bewegbar ist. Das Portal 14 weist zwei Portalträger 16,18, eine Brücke 20 und eine Stange oder Z-Säule 24 auf, wobei die Portalträger 16,18 miteinander an ihren oberen Enden über die Brücke 20 verbunden sind.

Auf der Brücke 20 ist ein Schlitten 22 angeordnet, der entlang der Brücke 20, d.h. in einer die beiden Portalträger 16,18 verbindenden Raumrichtung (X-Richtung) bewegbar ist. Die Stange oder Z-Säule 24 ist in einer dritten Raumrichtung (Z-Richtung) bewegbar und wird in einer Aufnahme des Schlittens 22 geführt. Für diese Bewegung in Z-Richtung ist die Z-Säule 24 in Lagern geführt, welche Bestandteile des Schlittens 22 sind. Insbesondre sind die drei Raumrichtungen X, Y und Z senkrecht zueinander ausgerichtet, auch wenn dieses keine Voraussetzung für die vorliegende Erfindung ist.

Die Koordinatenmessmaschine 1 ist vorgesehen für die Bestimmung eines oder einer Vielzahl von Messpunkten auf einem Objekt 12 und weist daher drei lineare Führungsmechanismen zur Ermöglichung der Bewegung eines an der Z-Säule an deren der Basis 3 zugewandtem, unterem freiem Ende angeordneten Messkopfs 6 in den drei Raumrichtungen X, Y und Z relativ zur Basis 3 auf.

Jeder lineare Führungsmechanismus hat eine zugeordnete Führung (in X-, Y- bzw. Z-Richtung). Ausserdem weist jeder lineare Führungsmechanismus ein zugeordnetes Messelement zur Positionsbestimmung in der zugeordneten Führungsrichtung, beispielsweise Messskalen 30X, 30Y, 30Z für Positionsbestimmungen in X-, Y- bzw. Z-Richtung, auf.

Der Messkopf 6 ist versehen mit einer Aufnahme für einen Sensor. beispielhaft ist in dieser Darstellung der Messkopf 6 versehen mit einem Stylus. Generell kann der Messkopf 6 ausgebildet sein zur Aufnahme taktiler Sensoren, mit denen ein mechanischer Kontakt zu einer zu vermessenden Objektoberfläche hergestellt wird, oder kontaktlos messender Sensoren, wie beispielsweise kapazitiver, induktiver und optischer Sensoren.

Die Erfindung ist nicht beschränkt auf Portal-Koordinatenmessmaschinen, wie in Fig. 1 dargestellt. Für die Erfindung geeignet ist vielmehr jede bekannte Art einer Koordinatenmessmaschine, welche eine Objektoberflächenvermessung mit einem optischen Sensor ermöglichen.

In dem Beispiel gemäss Fig. 1 sind die Portalträger 16, 18 jeweils auf in Y-Richtung entlang der Basis 3 bewegbaren Schlitten 28 gelagert.

Die Koordinatenmessmaschine 1 weist ausserdem eine Steuerungs- und Verarbeitungseinheit 11, mit einem Prozessor 34 und einer Vielzahl von Datenträgern 36, 38, auf. Mittels der Steuerungs- und Verarbeitungseinheit 11 werden insbesondere Antriebe der Koordinatenmessmaschine 1 angesteuert und die Messdaten gespeichert und verarbeitet. Bevorzugt ist die Steuerungs- und Verarbeitungseinheit 11 ausgebildet zur Ermöglichung einer vollautomatischen Vermessung von Objektoberflächen.

Für Zwecke direkter Benutzereingriffe oder direkter Benutzersteuerung kann die Steuerungs- und Verarbeitungseinheit 11 aber auch mit einer Benutzer-Konsole 32 verbunden sein, insbesondere Drahtlos z.B. via Funk.

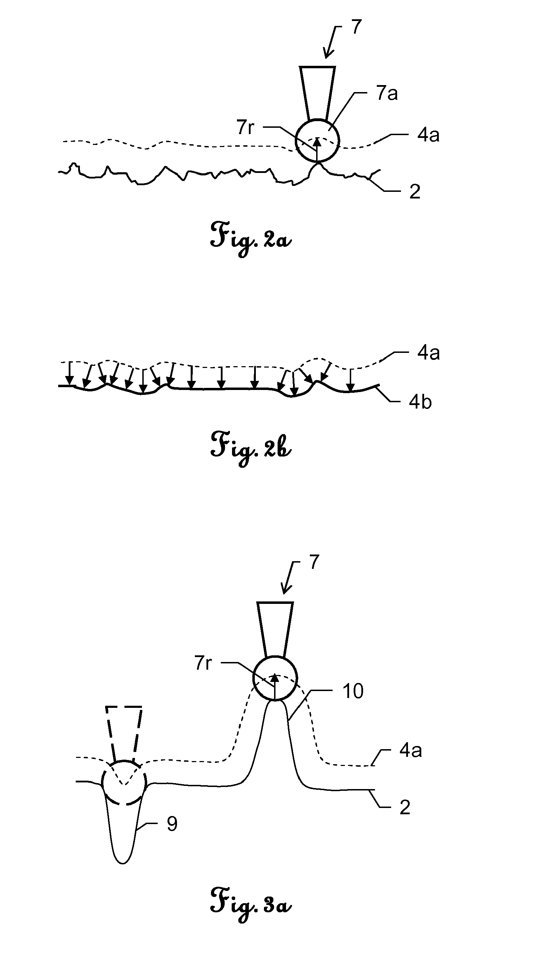

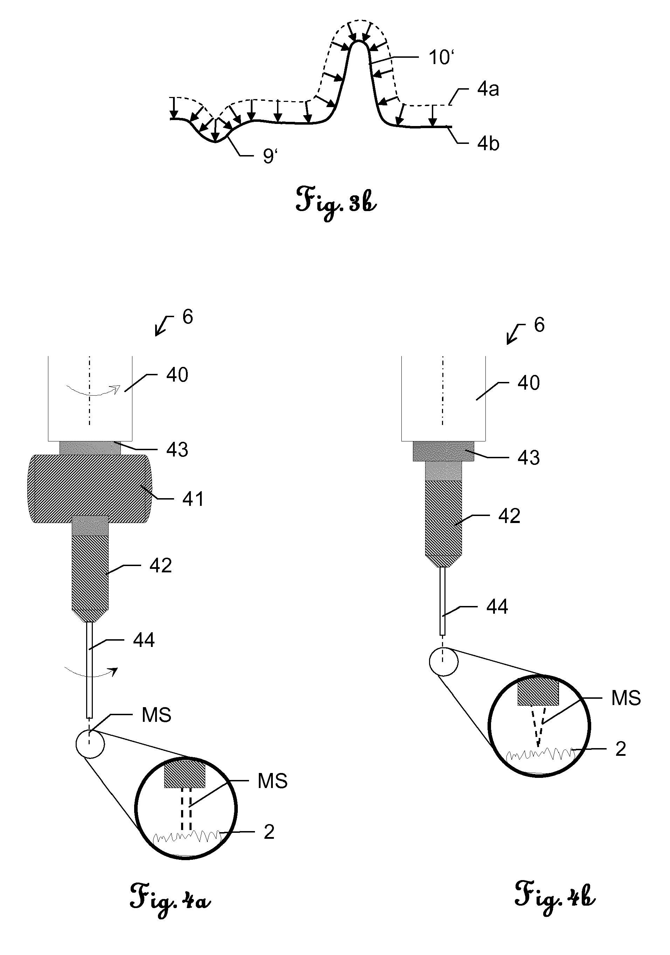

Fig. 2a und Fig. 2b sowie schematische Ausschnittsvergrösserungen dazu in Fig. 3a und 3b illustrieren die Abtastung einer Oberfläche 2 (physikalische Oberfläche) mit einem taktilen Sensor 7, der in dieser beispielhaften Darstellung eine kreisscheibenförmige oder sphärisch ausgebildete Messspitze 7a mit einem Radius 7r aufweist. Die Oberfläche 2 weist eine unregelmässige Strukturierung auf, mit charakteristischen Dimensionen von Erhöhungen 10 und Vertiefungen 9, die, insbesondere bezüglich deren Erstreckung parallel zur Oberfläche 2 in den Erhöhungsmaxima bzw. Vertiefungsminima, kleiner sind als der Durchmesser der Messspitze 7a. Als Folge unterscheidet sich ein mit dem taktilen Sensor bestimmtes Profil 4a von dem tatsächlichen Datenprofil der Oberfläche 2, und die aus dem Profil 4a durch Rekonstruktion, symbolisiert durch abwärts gerichtete Pfeile in Fig. 2b, erzeugten Oberflächenprofildaten 4b in der Objektprofil-Domäne stellen eine geglättete Abbildung der tatsächlichen Oberfläche 2 dar.

Diese Glättung ist nichtlinearer Art, wie in Fig. 3a und 3b mittels schematischer Ausschnittsvergrösserungen zu Fig. 2a und Fig. 2b illustriert. Fig. 3a zeigt eine Oberfläche 2 mit einer Vertiefung 9 und einer Erhöhung 10 sowie einem dazwischenliegenden, im Wesentlichen ebenen bzw. glatten Oberflächenabschnitt, wobei die Oberfläche 2 von einem taktilen Sensor 7 mit einem Radius 7r seiner kreisscheibenförmigen oder sphärischen Messspitze 7a abgetastet wird. Die Messspitze 7a kann der Erhöhung bzw. Erhebung 10 und deren Flanken im Wesentlichen frei zugänglich folgen. Demgegenüber kann die Messspitze 7a jedoch nicht bzw. nur geringfügig in die enge Vertiefung 9, insbesondere nicht bis zu deren tiefsten Punkt (lokales Minimum), eindringen.

Als Folge wird aus dem üblicherweise auf die Sphärenzentrum-Domäne bezogenen Profil 4a ein rekonstruiertes, nichtlinear geglättetes Profil 4b in der Objektprofil-Domäne, gemäss Fig. 3b, erzeugt: Die rekonstruierte Erhebung 10' und glatte Abschnitte der rekonstruierten Oberfläche 4b stellen ein im Wesentlichen originalgetreues Abbild der tatsächlichen Oberfläche 2 dar. Demgegenüber zeigt Fig. 3b eine nur stark geglättete Repräsentation 9' der tatsächlich viel stärker ausgeprägten Vertiefung 9 der Oberfläche 2.

Fig.4a zeigt eine beispielhafte schematische Darstellung eines Messkopfs 6 mit einem optischen Sensor 42 für eine Koordinatenmessmaschine. Der optische Sensor 42 ist an einer Aufnahme 43 am Ende eines Armelements 40 des Messkopfs 6 befestigt. Im Betriebszustand wird der optische Sensor 42 über das Armelement 40 und ein Gelenk 41 an der Aufnahme 43 als Führungsmittel definiert abtastend über eine zu vermessende Objektoberfläche 2 geführt, wobei eine Relativbewegung relativ zu der Objektoberfläche in zumindest eine oder zwei Richtungen ermöglicht ist. Gemäss diesem Beispiel ist ausserdem eine Rotation des Gelenks 41 gegenüber dem Armelement 40 ermöglicht. Durch die Rotierbarkeit gegenüber dem Armelement 40 und das nachfolgende Gelenk 41 kann der optische Sensor 42 gewinkelten oder stark veränderlichen Oberflächenverläufen gut folgen. Grundsätzlich können jedoch noch weitere rotatorische oder translatorische Freiheitsgrade in die Führungsmittel integriert werden, um eine weiter verbesserte Führung des optischen Sensors 42 zu ermöglichen.

Der optische Sensor 42 weist wenigstens einen oberflächenseitigen Emissions- und Empfangsstrahlengang für einen Laserstrahl bzw. Messstrahl MS auf. In dieser Ausführungsform werden die Strahlengänge durch eine dünne Röhre 44 am oberflächenzugewandten Ende des optischen Sensors 42 geführt, wobei gemäss diesem Beispiel im an diese Röhre 44 anschliessenden dickeren Teil des optischen Sensors 42 ein Strahlungsdetektor oder aber Lichtleiter zur Weiterleitung an einen andernorts integrierten Strahlungsdetektor angeordnet sein können. Der röhrenförmige Abschnitt 44 ist optional vorgesehen und insbesondere nicht erforderlich, wenn vorwiegend ebene Flächen und keine Bohrlöcher oder kleine Oberflächenstrukturen vermessen werden sollen. Der optische Sensor 42 kann durch die Führungsmittel so gesteuert werden, dass die Bedingung eines im wesentlichen senkrechten Auftreffens des Laserstrahls auf die Oberfläche eingehalten wird, insbesondere eine Abweichung von +/- 5° zur Flächennormalen nicht überschritten wird. Dabei kann der optische Sensor 42 so bewegt werden, dass dieser kontinuierlich mit relativ zu einer Oberflächentangente konstanter Ausrichtung verfahren wird, insbesondere mit senkrecht zur Oberflächentangente orientiertem Emissions- und Empfangsstrahlengang.

In dem Beispiel gemäss Fig. 4a ist der röhrenförmige Teil 44 in seiner Längsachse und damit gegenüber dem Gelenk 41 rotierbar ausgebildet, wie durch einen Pfeil symbolisiert. Hierdurch kann der Messstrahl MS, insbesondere wenn er einen Winkel zur Rotationsachse aufweist, auch eine kreisförmige Scanbewegung ausführen. Eine weitere Alternative stellt eine hier nicht dargestellte kreuzförmige Scanbewegung dar. Solche Scanbewegungen können insbesondere auch zur schnellen Grobmessung und damit zur Abschätzung der Lage einer Flächennormalen im zu vermessenden Bereich einer Oberfläche verwendet werden.

Fig. 4b zeigt eine Abwandlung der Ausführungsform gemäss Fig. 4a zur Ermöglichung lokaler Feinmessungen.

Hierbei wird die Messstrahlung MS nicht kollimiert emittiert, sondern im Nahbereich zur Auflösung einer fein strukturierten Oberfläche 2 fokussiert, wie in einer Ausschnittsvergrösserung verdeutlicht. Ausserdem weist die Ausführungsform gemäss Fig. 4b kein Gelenk auf.

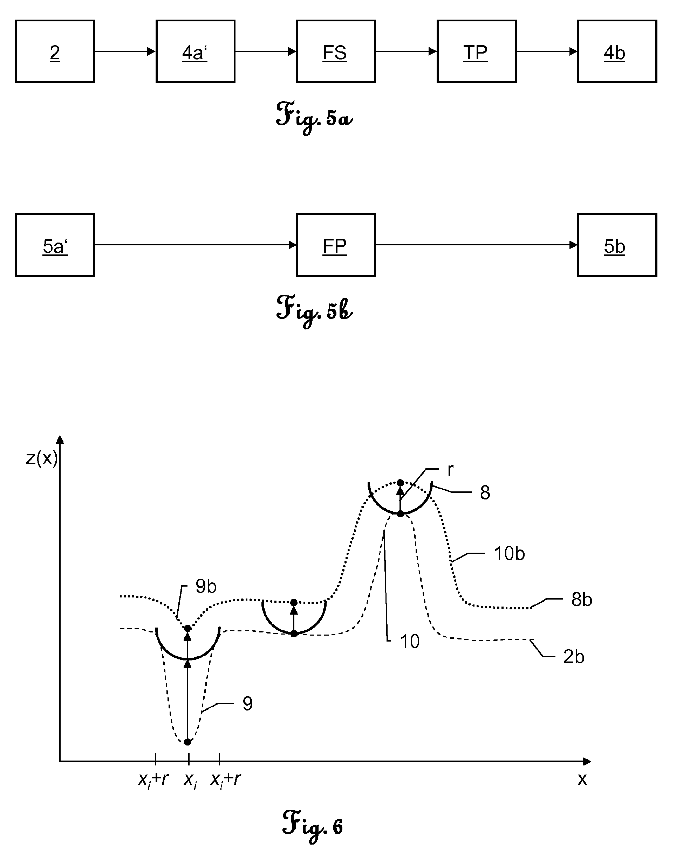

Bekannte Verfahren zur Bearbeitung der Messdaten von Koordinatenmessmaschinen mit taktilen Sensoren sind in Fig. 5a und mit optischen Sensoren in Fig. 5b anhand von Blockdiagrammen gezeigt.

Gemäss Figur 5 werden zunächst eine Oberfläche 2 mit einem taktilen Sensor erfasst bzw. gemessen und dabei Messdaten 4a' erzeugt. Für die Bearbeitung werden diese Messdaten, welche das auf die Sphärenzentrum-Domäne bezogene Profil 4a repräsentieren, dann typischerweise zur Weiterverarbeitung herangezogen. Die Daten 4a' werden mit einer Filterung FS in der Sphärenzentrum-Domäne bearbeitet. Dann erfolgt eine Transformation TP in die Objektprofil-Domäne, womit das rekonstruierte Oberflächenprofil 4b in der Objektprofil-Domäne erzeugt wird.

Die zur Bearbeitung der Ergebnisse taktiler Messungen eingesetzte Filterung FS hat üblicherweise nur einen geringen zusätzlichen Einfluss auf das aus Messdaten 4a' rekonstruierte Oberflächenprofil 4b, da die physikalische Abmessung der Messspitze eines taktilen Sensors bereits zu einem Glättungseffekt führt. Bei Anwendung der Filterung FS auf die Messdaten 4a' in der Sphärenzentrums-Domäne, in der bereits geglättete Messdaten (verglichen mit dem tatsächlichen Oberflächenprofil 2) vorliegen, erfolgt für die in die Objektprofil-Domäne rücktransformierten gefilterten Daten nur ein geringer Informationsverlust. Insbesondere die Messwerte kritischer Erhebungen 10 bzw. Peak-Höhen der Oberfläche 2 werden durch die Datenfilterung FS in der Sphärenzentrum-Domäne kaum beeinflusst.

Für die aus dem Stand der Technik bekannte Bearbeitung von Messdaten optischer Sensoren (Fig. 5b) werden die optisch erzeugten Messdaten 5a', welche - bedingt durch das Messverfahren - direkt auf die Objektprofil-Domäne bezogen sind, lediglich einer Filterung FP in der Objektprofil-Domäne unterzogen, woraus, ohne weitere Datentransformation, aus den optischen Messdaten 5a' ein rekonstruiertes Oberflächenprofil 5b erzeugt wird.

Die für die Bearbeitung der Messdaten optischer Sensoren eingesetzten Filter sind insbesondere vorgesehen zur Beseitigung von durch optisches Rauschen hervorgerufenen Fehlern oder Messfehlern wirken sich oft stärker aus als übliche Filter für Messergebnisse mit taktilen Sensoren. Da optische Sensoren Messwerte unmittelbar in der Objektprofil-Domäne liefern, werden die Daten bei der Filterung, ohne eine Rücktransformation, bereits in der Objektprofil-Domäne reduziert, was zu einem Verlust an Information auch über tatsächliche, und nicht nur artifizielle, Oberflächenmerkmale führen kann.

Anhand von Fig. 6 wird der erfindungsgemässe Vorschlag zur Erzeugung für praktisch-technische Anwendungen besser geeigneter Daten von mit optischen Sensoren vermessenen Oberflächen illustriert.

Dieser Ansatz beruht auf einer Überführung bzw. Transformation des mit einem optischen Sensor in ein mit einem (virtuellen) taktilen Sensor einer Koordinatenmessmaschine erzeugbares Oberflächenprofil. Der virtuelle taktile Sensor wird mit einer virtuellen Messspitze 8, beispielhaft gemäss Fig. 6 kreisscheibenförmig oder sphärisch mit einem Radius r ausgebildet, simuliert. Die Form der simulierten Messspitze 8 ist frei bestimmbar. Z.B. kann diese unterschiedliche Sphärenradien zur Simulation unterschiedlicher gewünschter Messauflösungen und/oder gegebenenfalls auch unterschiedlichen äusseren Formen (z.B. Ellipsoide oder Kantilever-Spitzen etc) mit unterschiedlichen vorgebbaren Abmessungen aufweisen. Damit kann ein mehr oder minder beschränktes Eindringen der virtuellen Messspitze 8 in eine Vertiefung 9 einer realen, von zuvor mit einem optischen Sensor vermessenen Oberfläche 2b simuliert werden. Die optischen Messdaten entsprechen dabei einer sehr genauen Abbildung der Objektoberfläche 2b, wobei diese methodeninhärent bezogen auf die Objektprofil-Domäne sind, typischerweise, abgesehen von vorangehend beschriebenen optisch bedingten Messfehlern.

Gemäss dieses erfindungsgemässen Ansatzes, der in Fig. 6 beispielhaft für die Durchführung in einer Raumdimension (X-Richtung) zur Bearbeitung von Höhen- oder Vertiefungsdaten ("Elevationsdaten z(x)" in Z-Richtung) illustriert ist, aber selbstverständlich insbesondere für flächig ausgedehnte Vermessungen in X- und Y-Richtung vorgesehen ist, werden die mit dem optischen Sensor bestimmten Elevationsdaten z(x) für jeden an der Oberfläche 2b gemessenen Messpunkt $x_i$ ermittelten Höhenwert $z_i$ geprüft, ob dieser Messpunkt für die virtuelle taktile Messspitze 8 erreichbar, d.h. mechanisch kontaktierbar, ist, oder ob, aufgrund zum Messpunkt $x_i$ benachbarter Erhebungen, ein Eindringen in eine am Ortspunkt $x_i$ vorliegende Vertiefung 9 der virtuellen Messspitze 8 beschränkt ist. Dieses kann numerisch geschehen mithilfe der folgenden Berechnung:

$$z_i' = z_i + \max\left(z_i(\xi) - s(\xi)\right) + r \qquad (1).$$

Dabei sind

z       die z-Koordinate in der Objektprofil-Domäne;

z'       die z-Koordinate in der virtuellen Sphärenzentrum-Domäne (Virtuelle-Sensor-Domäne);

r       der Radius der virtuellen Sphäre 8;

$$\xi = \left[x_i - r, x_i + r\right]$$

die x-Koordinaten im Intervall von $x_i$-r bis $x_i$+r; und

$$s(\xi) = z_i - \sqrt{r^2 - (\xi - x_i)^2} + r$$

ein Halbkreis, der beispielhaft die virtuelle Sphäre 8 darstellt.

Die resultierenden Werte z'(x) repräsentieren die Zentralkoordinaten der virtuellen, in diesem Beispiel sphärisch ausgebildeten, Messspitze 8 in der Virtuelle-Sensor-Domäne (virtuellen Sphärenzentrum-Domäne). Die Anwendung des Algorithmus (1) auf die Messdaten bewirkt eine Glättung der Messdaten von Oberflächenvertiefungen 9 zu in ihrer Tiefe verminderten Vertiefungen 9b in den Daten für das transformierte Oberflächenprofil 8b, da die virtuelle Messspitze 8 in enge Vertiefungsstrukturen 9 der Oberfläche 2b nicht eindringen kann. Demgegenüber belässt die Anwendung des Algorithmus (1) die Daten für Erhebungsstrukturen 10 der Oberfläche 2b im transformierten Oberflächenprofil 8b im Wesentlichen unverändert (Profil 10b). Eine weitere Filterung FS der Daten in der virtuellen Sphärenzentrum-Domäne und entsprechende Datenkorrektur kann wie für die Messdaten mit realen taktilen Sensoren erfolgen (siehe Fig. 5a).

Es wird darauf hingewiesen, dass zur Transformation der Messdaten auch andere Funktionen $s(\xi)$ zur Darstellung andersartig als sphärisch ausgebildeter virtueller taktiler Messspitzen eingesetzt werden können, beispielsweise für ellipsoid-artig ausgebildete oder benutzerdefinierte Messspitzenformen. Eine benutzerdefinierte Form kann beispielsweise beschrieben werden durch

$$s(\xi) = z_i + f(\xi - x_i) \,,$$

wobei f(x) beispielsweise definiert wird durch eine Zuordnungstabelle mit Werten zur Beschreibung der spezifischen, benutzerdefinierten Form der Messspitze.

Ausserdem wird darauf hingewiesen, dass für die Darstellung gemäss Fig. 6 zu Zwecken der Vereinfachung ein Oberflächen-Scan nur in einer Raumrichtung, nämlich der X-Richtung, angenommen wurde, und dieses in einem willkürlich ausgewählten Koordinatensystem. Insbesondere kann dabei im Rahmen von Transformation bzw. Filtern ein fortlaufendes Abtasten des optischen Oberflächenprofils 2b mit dem virtuellen taktilen Sensor 8 simuliert werden, insbesondere wobei das Abtasten mit zeilenweisem Versatz erfolgen kann. Erfindungsgemäss kann eine Oberflächenabtastung bzw. ein Oberflächen-Scan auch in jeder anderen, beliebigen Raumrichtung erfolgen, insbesondere auch einer gekrümmten oder einer scharf gebogenen Linie folgen. Dann ist die X-Koordinate für die Datentransformation nach Algorithmus (1) als eine eindimensionale Parametrisierung entlang der abgetasteten Linie auf der Objektoberfläche zu verstehen.

Zur Beschreibung der Erfindung mit anderen Worten: Das mit einem optischen Sensor einer Koordinatenmessmaschine erzeugte Oberflächenprofil 2b wird gefiltert, wobei ein Überführen des erzeugten optischen Oberflächenprofils 2b in ein (virtuelles) taktiles Oberflächenprofil 8b derart erfolgt, dass ein Kontaktieren des optischen Oberflächenprofils 2b mit einem virtuellen taktilen Sensor mit einer virtuellen Messspitze 8 simuliert wird. In Abhängigkeit von dem simulierten Kontaktieren wird das (virtuelle) taktile Oberflächenprofil 8b abgeleitet, sodass das (virtuelle) taktile Oberflächenprofil 8b die Objektoberfläche 2b als mit einem reellen taktilen Sensor erfasste Objektoberfläche repräsentiert. Die rekonstruierten Oberflächenkoordinaten werden aus dem (virtuellen) taktilen Oberflächenprofil 8b abgeleitet.

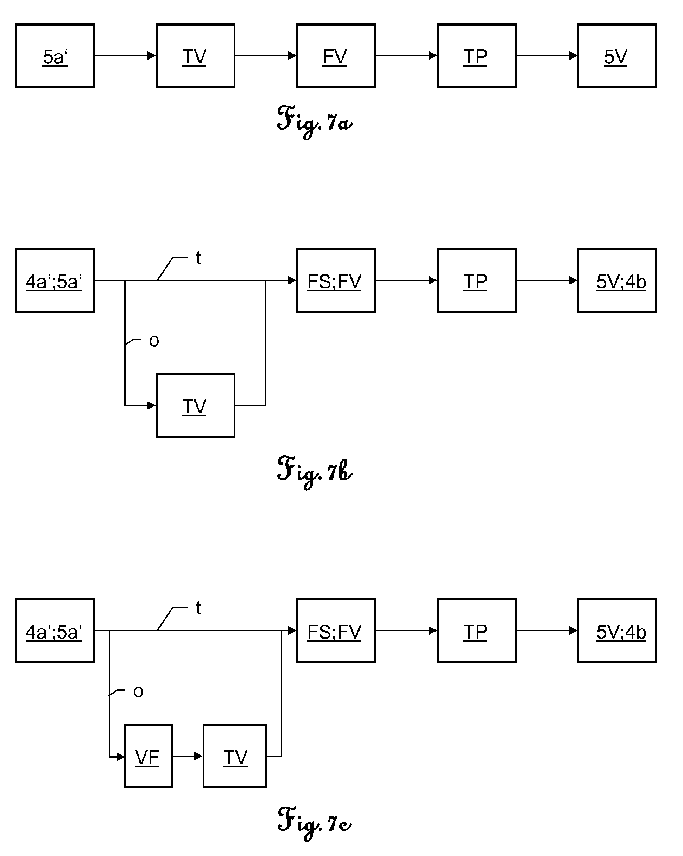

Fig. 7a, 7b und 7c zeigen in Blockdiagrammen Ausführungsformen für ein erfindungsgemässes Verfahren zur Bearbeitung von optisch erfassten Messdaten von Koordinatenmessmaschinen.

Das Blockdiagramm gemäss Fig. 7a unterscheidet sich von demjenigen gemäss Fig. 5b durch den nach der Einspeisung der optischen Messdaten 5a' zwischengeschalteten Schritt einer Transformation TV in mit einem virtuellen Sensor erzeugbare Messdaten, wie vorangehend anhand von Fig. 6 detailliert beschrieben. Daran schliesst sich eine Filterung FV der transformierten Daten an, welche im Wesentlichen der Filterung FS für taktile Sensoren gemäss Fig.

5a entspricht, insbesondere unter Berücksichtigung spezifischer Eigenschaften (z.B. optisches Rauschen und damit verbundener Messfehler) der Messdaten optischer Sensoren, wie vorangehend anhand von Fig. 5b beschrieben. Dabei kann bei der Ausgestaltung der Filterung FV berücksichtigt werden, dass die optischen Messdaten 5a' durch die Transformation TV bereits eine Glättung, insbesondere bezüglich Daten von Oberflächenvertiefungen, erfahren haben. Danach erfolgt eine Transformation TP in die Objektprofil-Domäne, womit rekonstruierte Oberflächendaten 5V erzeugt werden.

Für eine Bearbeitung von Messdaten sowohl optischer als auch taktiler Sensoren kann die Erfindung auch in einer Art ausgestaltet sein, wie es mit dem Blockdiagramm gemäss Fig. 7b illustriert ist. In den Datenverarbeitungsprozess werden eingangs Messdaten 4a' taktiler Sensoren oder Messdaten 5a' optischer Sensoren eingespeist. In einer anschliessenden Gabelung der Datenbearbeitung wird bestimmt, ob die Messdaten durch taktile Messungen t oder optische Messungen o erzeugt wurden. Bei Vorliegen von Messdaten taktiler Sensoren erfolgt die weitere Datenbearbeitung, mit einer Filterung FS, in der Weise, wie vorangehend anhand von Fig. 5a beschrieben, zur Erzeugung aus der taktilen Messung erzeugter rekonstruierter Daten 4b.

Bei Vorliegen von Messdaten optischer Sensoren erfolgt in einem Prozesszweig eine Transformation TV in mittels eines virtuellen taktilen Sensors erzeugbare Daten, wonach der weitere Prozess der Datenbearbeitung, mit einer Filterung FV, wie anhand von Fig. 7a beschrieben, fortgesetzt wird, zur Erzeugung rekonstruierter Daten 5V.

Ein gemäss dem Blockdiagramm von Fig. 7b illustriertes Verfahren hat den Vorteil, dass für die Bearbeitung der Messdaten taktiler Sensoren vorhandene Verfahrensschritte weitgehend übernommen werden können, wobei gegebenenfalls Parameter, insbesondere bei der Filterung FV, an die spezifischen Eigenschaften der Messdaten optischer Sensoren angepasst werden können.

Fig. 7c zeigt eine Abwandlung des Blockdiagramms von Fig. 7b, wobei in dem Zweig für die Bearbeitung von optischen Messdaten o vor die Transformation TV in virtuelle Messdaten ein Verfahrensschritt VF für eine Vorfilterung der Messdaten eingefügt ist. Diese Vorfilterung VF kann vorteilhaft sein, um einen Einfluss von Messfehlern bei optischen Messungen, z.B. bezüglich optisch gemessener Oberflächenerhöhungen durch Speckle-Effekte, bereits vor der Datentransformation TV zu verringern bzw. zu vermeiden. Beispielsweise kann der Vorfilter als ein einfacher Algorithmus zur gleitenden Erzeugung von Durchschnittswerten benachbarter Messpunkte ausgebildet sein. Dadurch kann die Datenmenge bereits in einem frühen Stadium der Datenverarbeitung reduziert werden, wodurch die Bearbeitungszeit entsprechend verringert werden kann.

Ein Computerprogrammprodukt mit Berücksichtigung der Verfahrensschritte gemäss den Bockdiagrammen von Fig. 7a, 7b und 7c ist Bestandteil der vorliegenden Erfindung.

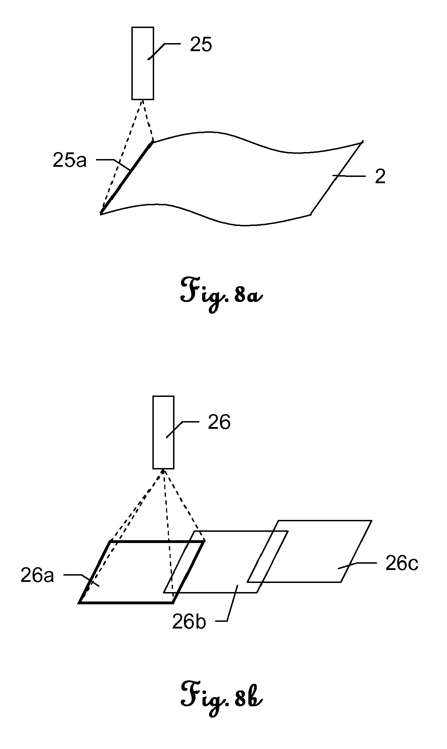

Das erfindungsgemässe Verfahren wurde anhand von Fig. 6 für die Datenbearbeitung entlang einer eindimensionalen Linie von Messpunkten beschrieben. Der Algorithmus (1) ist erfindungsgemäss ausdehnbar für eine Bearbeitung von Messdaten aus zweidimensionalen Messungen, beispielsweise gemäss Fig. 8a mit einem zur Abtastungsrichtung insbesondere senkrecht ausgerichteten Liniensensor 25 zur Erzeugung einer Abtastungslinie 25a von einer Oberfläche 2. Dann wird, bezogen auf eine virtuelle, sphärisch ausgebildete Messspitze eines taktilen Sensors, der Term $s(\xi)$ zur Beschreibung eines Halbkreises ersetzt durch einen Term $s(\xi,\zeta)$ zur Beschreibung einer Halbkugel, wobei $\zeta$ eine Ausdehnung der virtuellen Messspitze in einer beispielsweise zur Raumrichtung X senkrechten Y-Richtung bedeutet.

Das anhand der vorangehenden Figuren beschriebene erfindungsgemässe Verfahren ist auch zur Bearbeitung von mittels Flächensensoren 26 ermittelten Abtastungsdaten 26a, 26b, 26c (Fig. 8b) geeignet, wobei die Messdaten vermessener Flächenteile stückweise im Rahmen der Datenverarbeitung zusammengefügt werden zur Erzeugung eines Datenprofils der gesamten vermessenen Oberfläche.

Es versteht sich, dass diese dargestellten Figuren nur mögliche Ausführungsbeispiele schematisch darstellen. Die verschiedenen Ansätze können erfindungsgemäss ebenso miteinander sowie mit optischen Mess- und/oder Filterungsverfahren des Stands der Technik kombiniert werden.

## Patentansprüche

**1.** Koordinatenmessverfahren zum Erfassen einer Objektoberfläche (2) eines Objekts (12) mit einer Koordinatenmessmaschine (1) mit

- einem Messkopf (6) mit einem optischen Sensor (42) zur Erfassung der Objektoberfläche (2),
- einer Führung (22,28) zur Bereitstellung einer Relativbewegung des Messkopfs (6) zu dem Objekt (12) in zumindest eine Richtung, insbesondere in zwei Richtungen, und
- einer Steuerungseinheit (11),

wobei im Rahmen des Koordinatenmessverfahrens ein optisches Erfassen der Objektoberfläche (2) mit dem optischen Sensor (42) der Koordinatenmessmaschine (1) erfolgt und dabei ein ein Oberflächenprofil in einer Objektprofil-Domäne repräsentierender Datensatz (5a') erzeugt wird,

gekennzeichnet durch

● ein Filtern des Datensatzes (5a') **durch**

□ ein Simulieren eines Kontaktierens des **durch** den Datensatz (5a') repräsentierten Oberflächenprofils mit einem virtuellen taktilen Sensor (8) und
□ ein Ableiten eines Taktil-Datensatzes aus dem simulierten Kontaktieren, sodass der Taktil-Datensatz ein virtuelles Taktil-Oberflächenprofil (8b) in einer Virtuellen-Sensor-Domäne repräsentiert, und

● ein Ableiten von Oberflächenkoordinaten (5V) für die Objektoberfläche (2) aus dem Taktil-Datensatz.

2. Koordinatenmessverfahren nach Anspruch 1,
**dadurch gekennzeichnet, dass**
der virtuelle taktile Sensor (8) scheibenförmig implementiert ist, insbesondere als Kreisscheibe, oder dass der virtuelle taktile Sensor (8) ellipsoid geformt implementiert ist, insbesondere als Vollkugel oder Halbkugel.

3. Koordinatenmessverfahren nach Anspruch 1 oder 2,
**dadurch gekennzeichnet, dass**
der virtuelle taktile Sensor (8) als Sphäre (8) mit einem definierten Sphärenradius (r) implementiert ist, insbesondere wobei der Sphärenradius (r) in Abhängigkeit von einer bereitzustellenden Oberflächenglättung eingestellt wird.

4. Koordinatenmessverfahren nach einem der Ansprüche 1 bis 3,
**dadurch gekennzeichnet, dass**
im Rahmen des simulierten Kontaktierens ein fortlaufendes sequenzielles Abtasten des erzeugten Oberflächenprofils in der Objektprofil-Domäne mit dem virtuellen taktilen Sensor (8) simuliert wird und fortlaufend der Taktil-Datensatz, insbesondere das Taktil-Oberflächenprofil (8b), daraus abgeleitet wird, insbesondere wobei das Abtasten mit zeilenweisem Versatz erfolgt.

5. Koordinatenmessverfahren nach einem der Ansprüche 1 bis 3,
**dadurch gekennzeichnet, dass**
im Rahmen des simulierten Kontaktierens ein mehrdimensionales Antasten des durch den Datensatz (5a') repräsentierten Oberflächenprofils virtuell derart erfolgt, dass daraus der Taktil-Datensatz in Abhängigkeit einer vorgegebenen lateralen Auflösung mehrdimensional ableitbar ist.

6. Koordinatenmessverfahren nach Anspruch 5,
**dadurch gekennzeichnet, dass**
das virtuelle Antasten der Objektoberfläche (2) in Bezug auf die Fläche der erfassten Objektoberfläche (2) synchron erfolgt.

7. Koordinatenmessverfahren nach einem der Ansprüche 1 bis 6,
**dadurch gekennzeichnet, dass**
ein Vorfiltern (VF) derart erfolgt, dass das erzeugte Oberflächenprofil in der Objektprofil-Domäne zumindest teilweise bezüglich einer in dem Oberflächenprofil vorliegenden Höhenverteilung gemittelt wird, insbesondere geglättet wird.

8. Koordinatenmessverfahren nach einem der Ansprüche 1 bis 7,
**dadurch gekennzeichnet, dass**
das Ableiten der Oberflächenkoordinaten (5V) unter Berücksichtigung eines eine Form und/oder eine räumliche Ausdehnung des virtuellen taktilen Sensors (8) definierenden Parameters aus dem Taktil-Datensatz erfolgt, insbesondere aus dem Taktil-Oberflächenprofil (8b), insbesondere unter Berücksichtigung des Sphärenradius (r), sodass eine rekonstruierte Objektoberfläche (5V) abgeleitet wird.

9. Koordinatenmessverfahren nach einem der Ansprüche 1 bis 8,
**dadurch gekennzeichnet, dass**
das Simulieren des Kontaktierens und das Ableiten des Taktil-Datensatzes so erfolgt und somit das Taktil-Oberflächenprofil (8b) die Objektoberfläche (2) so repräsentiert, als ob diese mit einem reellen taktilen Sensor erfasst wäre.

10. Koordinatenmessmaschine zur Erfassung einer Objektoberfläche (2) eines Objekts (12) mit

● einer Basis (3),

● einem Messkopf (6) mit einem optischen Sensor (42) zur Erfassung der Objektoberfläche (2),

● einer Führung (22,28) zur Bereitstellung einer Relativbewegung des Messkopfs (6) relativ zur Basis (3) in zumindest eine Richtung, insbesondere in zwei Richtungen,

● einer Steuerungs- und Verarbeitungseinheit (11) und ● einer Scanfunktionalität, bei deren Ausführung gesteuert durch die Steuerungs- und Verarbeitungseinheit (11) ein Erfassen der Objektoberfläche (2) durch optisches Abtasten vermittels des optischen Sensors (42) erfolgt und dabei ein ein Oberflächenprofil in einer Objektprofil-Domäne repräsentierender Datensatz (5a') erzeugt wird,

**dadurch gekennzeichnet, dass**

● die Koordinatenmessmaschine (1) eine Filterfunktionalität (TV) aufweist, bei deren Ausführung gesteuert durch die Steuerungs- und Verarbeitungseinheit (11) mittels eines Algorithmus ein Filtern des Datensatzes (5a') erfolgt durch

☐ ein Simulieren eines Kontaktierens des durch den Datensatz (5a') repräsentierten Oberflächenprofils mit einem virtuellen taktilen Sensor (8) und

☐ ein Ableiten eines Taktil-Datensatzes aus dem simulierten Kontaktieren, sodass der Taktil-Datensatz ein virtuelles Taktil-Oberflächenprofil (8b) in einer Virtuellen-Sensor-Domäne repräsentiert, und

● Oberflächenkoordinaten (5V) für die Objektoberfläche (2) aus dem Taktil-Datensatz ableitbar sind.

11. Koordinatenmessmaschine (1) nach Anspruch 10,
    **dadurch gekennzeichnet, dass**
    die Steuerungs- und Verarbeitungseinheit (11) derart konfiguriert ist, dass ein Koordinatenmessverfahren nach einem der Ansprüche 1 bis 9 ausführbar ist, insbesondere wobei das Filtern gesteuert durch die Steuerungs- und Verarbeitungseinheit (11) ausgeführt wird.

12. Koordinatenmessmaschine (1) nach Anspruch 10 oder 11,
    **dadurch gekennzeichnet, dass**
    die Führung (22,28) der Koordinatenmessmaschine (1) ausgebildet ist als Linearführung mit einem Führungselement, insbesondere einer Schiene, und mit einem Antriebselement, insbesondere einem Schlitten, insbesondere wobei das Antriebselement entlang des Führungselements definiert motorisiert bewegbar ist.

13. Koordinatenmessmaschine (1) nach einem der Ansprüche 10 bis 12,
    **dadurch gekennzeichnet, dass**
    die Koordinatenmessmaschine (1) eine den Messkopf tragende Rahmenstruktur (14) aufweist, wobei die Rahmenstruktur (14) in eine horizontale (X,Y) und eine vertikale (Z) Richtung relativ zur Basis (3) bewegbar ist, insbesondere mittels der Linearführung.

14. Koordinatenmessmaschine (1) nach Anspruch 13,
    **dadurch gekennzeichnet, dass**
    die Rahmenstruktur (14) zumindest ein erstes (16,18) und ein zweites (20) Rahmenelement und eine vertikale Stange (24) aufweist, insbesondere wobei das zumindest eine erste Rahmenelement (16,18) vermittels der Führung (22,28) relativ zur Basis (3) bewegbar ist.

15. Computerprogrammprodukt, das auf einem maschinenlesbaren Träger gespeichert ist, zur Ausführung des Filterns des Datensatzes (5a') des Koordinatenmessverfahrens nach einem der Ansprüche 1 bis 9, insbesondere wenn das Computerprogrammprodukt auf einer Steuerungs- und Verarbeitungseinheit (11) einer Koordinatenmessmaschine (1) nach einem der Ansprüche 10 bis 14 ausgeführt wird.

Fig. 1

*Fig. 2a*

*Fig. 2b*

*Fig. 3a*

10'

4a

4b

9'

*Fig. 3b*

6

40

43

41

42

44

MS

MS

2

*Fig. 4a*

6

40

43

42

44

MS

2

*Fig. 4b*

**Fig. 5a**

**Fig. 5b**

**Fig. 6**

Fig. 7a

Fig. 7b

Fig. 7c

*Fig. 8a*

*Fig. 8b*

Europäisches
Patentamt

European
Patent Office

Office européen
des brevets

# EUROPÄISCHER RECHERCHENBERICHT

**Nummer der Anmeldung**

EP 12 18 0928

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | LICHENG WANG ET AL: "Measurement Error Compensation Using Data Fusion Technique for Laser Scanner on AACMMs", 10. November 2010 (2010-11-10), INTELLIGENT ROBOTICS AND APPLICATIONS, SPRINGER BERLIN HEIDELBERG, BERLIN, HEIDELBERG, PAGE(S) 576 - 586, XP019156156, ISBN: 978-3-642-16586-3 * Absatz [0002] * ----- | 1,10,15 | INV. G01B21/04 |
| X | JERZY SLADEK ET AL: "The hybrid contact-optical coordinate measuring system", MEASUREMENT, Bd. 44, Nr. 3, 1. März 2011 (2011-03-01), Seiten 503-510, XP055047404, ISSN: 0263-2241, DOI: 10.1016/j.measurement.2010.11.013 * Absätze [0001], [2.2.1]; Abbildung 5 * ----- | 1,10,15 | |
| X | WEI-LUN CHENG ET AL: "Integrated laser/CMM system for the dimensional inspection of objects made of soft material", THE INTERNATIONAL JOURNAL OF ADVANCED MANUFACTURING TECHNOLOGY, Bd. 10, Nr. 1, 1. Januar 1995 (1995-01-01), Seiten 36-45, XP055047407, ISSN: 0268-3768, DOI: 10.1007/BF01184276 * Absätze [0001], [0006] * ----- -/-- | 1,10,15 | RECHERCHIERTE SACHGEBIETE (IPC) G01B |

Der vorliegende Recherchenbericht wurde für alle Patentansprüche erstellt

| Recherchenort | Abschlußdatum der Recherche | Prüfer |
|---|---|---|
| München | 11. Dezember 2012 | Arca, Giovanni |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**Europäisches Patentamt**
**European Patent Office**
**Office européen des brevets**

**EUROPÄISCHER RECHERCHENBERICHT**

Nummer der Anmeldung

EP 12 18 0928

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | HAIBIN ZHAO ET AL: "Automated dimensional inspection planning using the combination of laser scanner and tactile probe", MEASUREMENT, INSTITUTE OF MEASUREMENT AND CONTROL. LONDON, GB, Bd. 45, Nr. 5, 31. Januar 2012 (2012-01-31), Seiten 1057-1066, XP028477284, ISSN: 0263-2241, DOI: 10.1016/J.MEASUREMENT.2012.01.037 [gefunden am 2012-02-15] * das ganze Dokument * ----- | 1,10,15 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 11. Dezember 2012 | Arca, Giovanni |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4325337
- DE 4325347
- US 5402582 A
- EP 1474650 A
- EP 2037214 A
- DE 102005061464
- FR 2738343
- DE 19735975